# FASCICULE DE BREVET EUROPEEN

(11) **EP 2 462 180 B1**
(45) Date de publication et mention de la délivrance du brevet: **18.02.2015**
(21) Numéro de dépôt: 10737571.9
(22) Date de dépôt: 30.07.2010
(51) Int. Cl.: C08G 73/06, C08F 8/30, C08G 64/00

(54) **POLYMERES SUPRAMOLECULAIRES ET COMPOSITIONS A BASE DESDITS POLYMERES**
SUPRAMOLEKULARE POLYMERE UND ZUSAMMENSETZUNGEN MIT DIESEN POLYMEREN
SUPRAMOLECULAR POLYMERS AND COMPOSITIONS CONTAINING SAID POLYMERS

(30) Priorité: 06.08.2009 FR 0903878
(43) Date de publication de la demande: 13.06.2012
(73) Titulaire: Rhodia Opérations, 93306 Aubervilliers (FR)
(72) Inventeur: BADEL, Thierry, F-69007 Lyon (FR); JEOL, Stéphane, F-69006 Lyon (FR); TOURAUD, Franck, F-38780 Eyzin Pinet (FR)
(86) Numéro de dépôt international: PCT/EP2010/061092
(87) Numéro de publication internationale: WO 2011/015525

(56) Documents cités:
- WO-A1-2006/006855
- WO-A2-03/059964
- JP-A- 9 151 249
- JP-A- 9 151 252
- NL-A- 7 104 415
- US-A- 3 763 091
- US-A- 3 876 583
- AKERLUND, J.; HARMEIER, S.; PUMPHREY, J.; TIMM, D. C.; BRAND, J. I.: "Diketopiperazine-based polymers from common amino acids", JOURNAL OF APPLIED POLYMER SCIENCE, vol. 78, no. 78, 1 janvier 2000 (2000-01-01), pages 2213-2218, XP009132854,
- S. PALACIN, D.N.CHIN, E.E.SIMANEK, J.C.MACDONALD, G.M.WHITESIDES, M.T.MCBRIDE AND G.T.R.PALMORE: "Hydrogen-Bonded Tapes Based on Symmetrically Substituted Diketopiperazines: A Robust Structural Motif for the Engineering of Molecular Solids", J. AM. CHEM. SOC., vol. 119, no. 49, 10 décembre 1997 (1997-12-10), pages 11807-1816, XP002579961, DOI: 10.1021/ja962905b

## Description

La présente invention concerne des polymères supramoléculaires et les compositions à base desdits polymères.

Il est connu que les polymères et composés supramoléculaires contiennent des groupements qui forment des interactions physiques (ou liaisons non covalentes) réversibles entre elles, en particulier les liaisons hydrogène, alors que, dans un polymère conventionnel, les motifs répétitifs sont reliés entre eux par des liaisons covalentes. En général, la chimie supramoléculaire est donc définie comme la chimie des interactions coopératives, non covalentes, orientées et multiples. Sur la base de ce concept, les polymères supramoléculaires sont des polymères dans lesquels les motifs répétitifs sont des monomères ou des oligomères de faibles masses, reliés entre eux par des liaisons non covalentes. Un avantage majeur de ces polymères supramoléculaires est que ces interactions physiques intermoléculaires sont réversibles.

Le brevet EP 1465930 décrit des polymères supramoléculaires à bases de motifs imidazolidone. Le brevet US 6320018 décrit des polymères supramoléculaires à base de motifs ayant des groupements ureidopyrimidone. La demande de brevet EP 1031589 décrit des polymères supramoléculaires à base de motifs à fonctions urée ou carbamate (produit de réaction d'isocyanates sur composés azotés). La demande de brevet EP 1136506 décrit des polymères supramoléculaires à base de motifs à fonctions glutarimide. La demande de brevet WO 01 07396 décrit des polymères supramoléculaires à base de motifs aromatiques portant à la fois des fonctions hydroxyle et des fonctions acide carboxylique. JP 9 151252 A, JP 9 151249 1, US 3 763 091 A, NL 7 104 415 A, US 3 876 583 A et AKERLUND, J.; HARMEIER; S. ; PUMPHREY, J. ; TIMM, D.C. ; BRAND, J.I. : « Diketopiperazine-based polymers from common amino acids », Journal of Applied Polymer Science, vol. 78, no. 78, 1 janvier 2000, pages 2213-2218 sont relatifs à des polymères conventionnels dont les motifs répétitifs qui comprennent le groupe 2,5-dicétopipérazine sont liés entre eux par des liaisons covalentes.

S.PALACIN, D.N. CHIN, E.E. SIMANEK, J.C. MACDONALD, G.M. WHITESIDES, M.T. MCBRIDE et G.T.R. PALMORE : « Hydrogen-bonded Tapes Based on Symmetrically Substituted Diketopiperazines : A Robust Structural Motif for the Engineering of molecular Solids », J. AM. SOC., vol.119, no.49, 10 décembre 1997, pages 11807-1816 décrit des arrangements cristallins de 2,5-dicétopipérazine sous forme de rubans, d'empilements et de feuilles, c'est-à-dire ne comprenant pas de phase amorphe.

WO 03/059964 A2 et WO 2006/006855 A1 décrivent des polymères supramoléculaires mais pas de composition à base de polymère supramoléculaire dont les motifs répétitifs sont liés entre eux par des liaisons hydrogène et dont au moins un des motifs contient un groupe 2,5-dicétopipérazine.

Il existe toujours un besoin dans l'industrie pour le développement de polymères et de matériaux qui puissent être préparés de façon simple à partir de matières premières accessibles économiquement et en quantités suffisantes et permettant de fabriquer des matériaux aux propriétés intéressantes. Les polymères supramoléculaires de la présente invention répondent à ce besoin et offrent en plus l'avantage de nouveaux compromis de propriétés, inaccessibles par des polymères conventionnels.

La présente invention propose des polymères supramoléculaires dans lesquels les motifs répétitifs sont des monomères ou des macromères qui peuvent être fabriqués de façon simple et économique à partir de matières premières accessibles. Elle concerne en effet une composition préparée à partir d'un polymère supramoléculaire comprenant des motifs répétitifs liés entre eux par des liaisons hydrogène et dont au moins un desdits motifs répétitifs contient un groupe 2,5-dicétopipérazine (dénommé par la suite « groupe DKP »). La composition se présente à température ambiante sous forme d'une pâte ou d'un solide semi-cristallin ou amorphe.

De façon préférée, au moins un desdits motifs répétitifs est un groupe 2,5-dicétopipérazine (groupe DKP).

Le groupe 2,5-dicétopipérazine (groupe DKP) peut en particulier répondre à la formule générale (1): 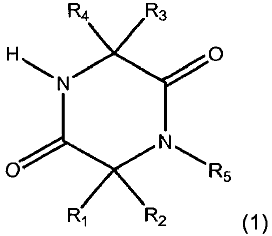 dans laquelle, R₁, R₂, R₃ et R₄ et R₅, identiques ou différents, représentent :
- un atome, en particulier H, ou
- un groupe hydrocarboné linéaire, ramifié, peignes, étoile, saturé ou insaturé, pouvant éventuellement contenir un ou des hétéroatomes.

Comme indiqué ci-dessus, les groupes hydrocarbonés R₁, R₂, R₃ et R₄ et R₅ peuvent éventuellement contenir un ou des hétéroatomes qui sont généralement choisis parmi N, O, S, Si, P et les halogènes, de préférence le chlore.

Le groupe hydrocarboné est de préférence choisi parmi :
- un groupe cycloalkyle, ayant de 3 à 20 atomes de carbone, et préférentiellement de 4 à 12 atomes, pouvant éventuellement contenir un ou des hétéroatomes, par exemple un cyclohexyle,
- un groupe aromatique, ayant de 6 à 20 atomes de carbone, pouvant éventuellement contenir un ou des hétéroatomes, comme par exemple un groupe phényle, un hydroxyphényle,
- une groupe alkyle ayant de 1 à 20 atomes de carbone, de préférence de 1 à 10 atomes de carbone,
- un groupe alkylaryle ou arylalkyle, présentant de 6 à 20 atomes de carbone, de préférence de 6 à 10 atomes de carbone ; pouvant éventuellement contenir un ou des hétéroatomes, comme par exemple un benzyle, un tolyle.

Les groupes R₁, R₂, R₃, R₄ et R₅ ci-dessus définis, identiques ou différents, peuvent également contenir un ou plusieurs groupements donneur et/ou accepteur de liaisons H.

R₁, R₂, R₃ et R₄ et R₅, identiques ou différents, peuvent également représenter un polymère ou un oligomère conventionnel (c'est-à-dire dont les motifs répétitifs sont liés entre eux par liaisons covalentes) pouvant éventuellement contenir un ou des hétéroatomes, tels que les polyoxyalkylènes, en particulier polyoxyéthylène, polyoxypropylène, les polyamides, les polyesters, les polyurées, les polyuréthanes, les polyacides acryliques et leurs dérivés, les polyoléfines, les polyvinyliques, et les polystyrèniques. Ces polymères peuvent être linéaires, ramifiés, peignes, étoiles, saturés ou insaturés.

Dans le cas où R₁, R₂, R₃ et R₄ et R₅, identiques ou différents, sont des polymères ou oligomères conventionnels tels que définis ci-dessus, les motifs répétitifs de ces polymères ou oligomères conventionnels, liés entre eux par liaisons covalentes, peuvent également contenir un ou plusieurs groupements donneur et/ou accepteur de liaisons H. Dans le cas où les motifs répétitifs de ces polymères ou oligomères conventionnels contiennent des groupements donneur et/ou accepteur de liaison H, alors ces motifs répétitifs sont différents de la DKP.

Des exemples de groupements (ou fonctions) donneur et/ou accepteur de liaisons H sont les amines (primaire, secondaire, tertiaire), alcools (primaire, secondaire, aromatique), thiols, acides carboxyliques, esters, amides (primaire, secondaire, tertiaire), imides, thioamides, éthers, sulfures, imines, azos, sulfones, sulfonates, sulfonamides, urées, uréidos, guanidos, 2,5-dicétopipérazines, pyroglutamiques, glutarimides, imidazolidones, cyanos, carbamates, cétones, aldéhydes, carbonates, silanols, halogènes, hydroxydes métalliques, et métaux carbonyle.

Par « métaux carbonyle » on entendra par exemple des sels métalliques d'acides carboxyliques.

Dans le polymère supramoléculaire de l'invention, les interactions par liaisons hydrogène entre deux motifs répétitifs pouvant intervenir sont notamment :
- une interaction entre les cycles du groupe 2,5-dicétopipérazine de formule (1) dénommés par la suite cycles DKP. En effet, chaque cycle DKP est porteur de deux fonctions accepteur H (carbonyle) et d'au moins une fonction donneur H (NH amide) et peut interagir par liaison hydrogène avec tout groupement respectivement donneur H et accepteur H, notamment un autre cycle DKP. La formule ci-dessous (2) représente un exemple possible d'interaction entre deux cycles DKP: 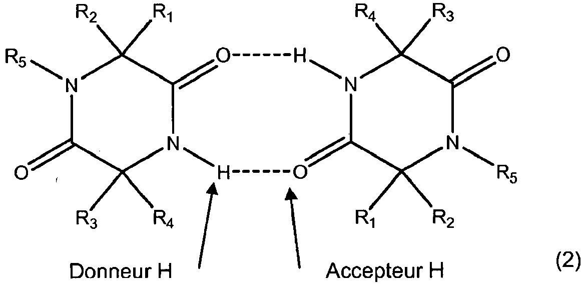
- une interaction entre un ou plusieurs groupements donneur et/ou accepteur de liaisons H portés par les groupes R₁, R₂, R₃, R₄ et R₅ du groupe DKP et un cycle DKP d'un autre groupe DKP. En effet, chaque cycle DKP étant porteur de deux fonctions accepteur H (carbonyle) et d'au moins une fonction donneur H (NH amide), il peut interagir par liaison hydrogène avec tout groupement respectivement donneur H et accepteur H,
- une interaction entre un ou plusieurs groupements donneur et/ou accepteur de liaisons H portés par les groupes R₁, R₂, R₃, R₄ et R₅ d'un groupe DKP et un ou plusieurs groupements donneur et/ou accepteur de liaisons H portées par les groupes R₁, R₂, R₃, R₄ et R₅ d'un autre groupe DKP,
- une interaction entre un cycle DKP d'un groupe DKP et un ou plusieurs groupements donneur et/ou accepteur de liaisons H portées par un autre motif répétitif, différent d'un groupe DKP.
- une interaction entre un ou plusieurs groupements donneur et/ou accepteur de liaisons H portés par les groupes R₁, R₂, R₃, R₄ et R₅ d'un groupe DKP et un ou plusieurs groupements donneur et/ou accepteur de liaisons H portés par un autre motif répétitif, différent d'un groupe DKP.

Plusieurs types d'interactions par liaisons hydrogène parmi celles citées ci-dessus peuvent intervenir dans le polymère supramoléculaire de l'invention.

Selon un mode de réalisation préférée, le groupe 2,5-dicétopipérazine de formule (1) est tel que R₁=R₃= H et R₂, R₄ et R₅ est un substituant comme définit précédemment comme montré sur le schéma (3).

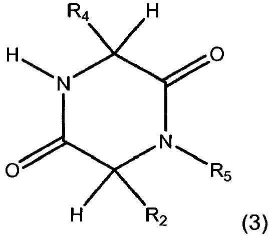

Ces groupes 2,5-dicétopipérazines de formule (1) peuvent être préparées à partir d'acides aminés ou de leur dérivés, selon les techniques connues de l'homme de l'art, notamment par chauffage d'aminoacides, de dipeptides linéaires, par dépolymérisation d'un polyaminoacide ou polypeptide, par synthèse peptidique (type Merrifield).

La synthèse peut être réalisée en masse ou en solution, ou en dispersion.

La cinétique de la réaction peut être accélérée en élevant la température, par catalyse ou sous pression réduite.

La synthèse de la 1,4-H 2,5-dicétopipérazine ou l'anhydride de glycine peut être réalisée par exemple à partir de l'ester de glycine en chauffant éventuellement à une température supérieure à la température ambiante, suivant le schéma réactionnel :

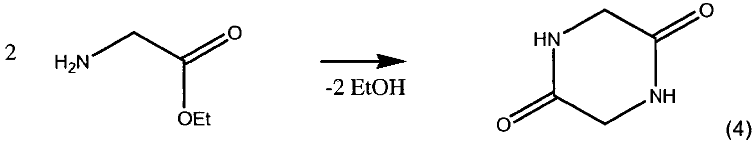

De la même façon, le schéma réactionnel à partir d'α-aminoacides peut s'écrire comme suit :

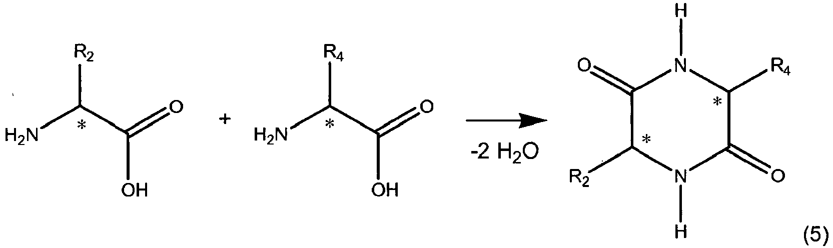

Les α-aminoacides utilisables peuvent être d'origine naturelle dont les plus connus sont les L-Alanine, L-Arginine, L-Asparagine, acide L-Aspartique, L-Cystéine, acide L-Glutamique, L-Glutamine, Glycine, L-Histidine, L-Isoleucine, L-Leucine, L-Lysine, L-Méthionine, L-PhénylAlanine, L-Proline, L-Sérine, L-Thréonine, L-Tryptophane, L-Tyrosine, L-Valine, L-Sélénocystéine, L-Pyrrolysine.

De nombreux autres α-aminoacides existent également dans le milieu naturel. Plus de 300 α-aminoacides sont ainsi répertoriés (cf. Handbook of Biochemistry and Molecular Biology, 3rd Edition, CRC Press, 1982).

Une large diversité de groupements latéraux R est disponible et peut être judicieusement employée pour moduler les propriétés désirées et obtenues de la dicétopiperazine et des polymères ou composés supramoléculaires dérivés.

On trouve, entre autre :
- des α-aminoacides à groupements latéraux alkyle, linéaires ou ramifiés, comme l'acide α-amino butyrique, l'acide α-amino heptanoique, l'acide α-amino octanoique, , l'acide α-amino isobutyrique, l'homoisoleucine ou acide α-amino 4-méthyl hexanoique, l'acide α-amino adipique,
- des α-aminoacides à groupements latéraux aryle, arylalkyle, linéaires ou ramifiés, comme l'acide α-amino β-phényl butyrique,
- des α-aminoacides à groupements latéraux cycloaliphatiques comme l'acide 1-amino cyclopropane 1-carboxylique,
- des α-aminoacides à groupements latéraux aliphatiques insaturés, comme l'acide 2-amino 3-formyl 3-pentenoique, l'acide α-amino 4-hexenoique, l'acide α-amino 4-méthyl Hex-4-enoique, l'Hypoglycine A, l'acide α-amino 5-méthyl Hex-4-enoique, l'α-(méthylène cyclopropyl) glycine
- des α-aminoacides à groupements latéraux portant des fonctions carboxyliques ou dérivés comme l'acide α-amino pimellique, l'éthyl asparagine, la N-isopropyl Glutamine, La N-méthyl Asparagine, l'acide β-méthyl aspartique, l'acide γ-méthyl glutamique, la Théanine, la m-carboxy phenylalanine,
- des α-aminoacides portant des groupements latéraux amine ou dérivés comme la N-acétyl Ornithine, l'acide α-amino γ-N-acetyl aminobutirique, l'acide α-amino 3-dimethylamino propionique, l'acide α-amino β-methylamino propionique, l'acide α, γ-diamino butyrique, l'acide α, β-diamino propionique, La ε-N-methylLysine, l'acide β-N-Oxalyl α, β-diamino propionique,
- des α-aminoacides portant des fonctions hydroxyle ou dérivés : l'O-acétyl homosérine, l'acide 2-amino 4,5-dihydroxy pentanoique, l'acide α-amino γ-hydroxy adipique, l'acide α-amino 6-hydroxy amino hexanoique, l'acide α-amino γ-hydroxy butyrique, l'acide α-amino δ-Hydroxy valérique, l'acide α-amino β-méthyl γ,δ-dihydroxy isocaproique, L'O-butyl homosérine, la β,γ-dihydroxy isoleucine, la γ,δ-dihydroxy isoleucine, l'O-Ethyl homosérine, l'homosérine, l'α-hydroxy Alanine, la β-hydroxy Asparagine, l'acide β-hydroxy aspartique, l'acide β-hydroxy glutamique, l'acide γ-hydroxy glutamique, la β-hydroxy leucine, la δ-hydroxy leucine, la thréo β-hydroxy leucine, l'γ-hydroxy norvaline, l'α-hydroxy valine, la γ-hydroxy valine, l'acide γ-méthyl γ-hydroxy glutamique, la pantonine, l'O-propyl homosérine, O-succinyl homosérine, la 2,4- di hydroxy 6-methyl Phenylalanine, La 3,4-dihydroxy phénylalanine, la 3,5-dihydroxyphényl glycine, la m-hydroxyphényl glycine, l'O-méthyl Tyrosine, la m-tyrosine,
- des α-aminoacides portant des fonctions Cétone ou aldéhyde: l'acide α-amino β-ketonutyrique, la 4-kétonorleucine,
- des dérivés uréidos et guanido comme l'albizziine, la canavanine, l'acide canavanosuccinique, la citrulline, la gigartinine, l'homoarginine, l'homocitrulline, la γ-hydroxyarginine, la γ-hydroxyhomoarginine, l'indospicine.
- des dérivés cyano et azo comme l'alanosine, l'azaserine, la β-cyanoalanine, l'ε-diazo, l'hadacidin, le Lathyrus factor
- des hétérocycles comme l'échinine, le 2-hydroxy trytptophane, le (-hydroxy trytptophane, l'acide ibotenique, l'indole 3-acétyl ε-lysine, la lathytine, le β-méthyl tryptophane, la mimosine, la muscazone, la β-3-oxindolyl alanine, β-pyrazol 1-yl alanine, l'acide stizolobique, l'acie stizolobinique, l'acide tricholomique.

Les groupements latéraux R₁ à R₅ peuvent également porter des combinaisons de plusieurs fonctions, comme par exemple :
- à la fois un acide carboxylique ou dérivé et une insaturation : l'acide γ-éthylidène glutamique, la N-fumaryl alanine, l'acide y-méthylène glutamique ;
- à la fois des groupements fonctionnels acide et amine ou dérivés, comme la N-ε-(2-amino 2-carboxyéthyl) Lysine, la N-δ-(2-amino 2-carboxyéthyl) Ornithine, l'acide α,ε-diamino pimélique, l'acide 2,3-diamino succinique, la tabtoxinine ;
- à la fois des groupements Hydroxyle et des insaturations : l'acide α-amino 6-hydroxy 4-méthylhex 4-énoique, l'acide α-amino 3-hydroxymethyl 3-pentènoique, la δ-hydroxyleucenine ;
- à la fois des groupements Hydroxyle et acide ou dérivés : l'acide α-amino γ-Hydroxy pimélique, l'acide β,γ-diHydroxy Glutamique, la N-(2-Hydroxyethyl) asparagine, la N-(2-Hydroxyethyl) glutamine, la γ-hydroxy glutamine, La 3-carboxy 4-hyfdroxyphényl alanine ;
- à la fois des groupements Hydroxyle et cétone : la δ-hydroxy γ-ketonorvaline ; et
- à la fois des groupements Hydroxyle et amine : l'α-hydroxy Lysine, l'δ-hydroxy Lysine, l'ε-hydroxylamino norleucine, la γ-hydroxy Ornithine, la 3-hydroxy kynurénine (cétone en plus), la kynuréine (cétone en plus).

Ces fonctions et combinaisons de fonctions sont uniquement citées à titre d'exemples non limitatifs. De nombreuses autres combinaisons de fonctions sont également possibles, soit sous forme d'α-aminoacides disponibles à l'état naturels, soit issus de synthèses organiques, modification chimique ou biochimiques.

Les α-aminoacides d'origine naturelle peuvent également être obtenus par toute autre voie comme la fermentation par différentes souches bactériennes ou microorganismes, génétiquement modifiés ou non, à partir de différents substrats, tout comme par synthèse organique, enzymatique ou toute autre voie de synthèse connue de l'homme de l'art.

Les groupes 2,5-dicétopiperazine peuvent également être synthétisés à partir d' α-aminoacides non naturels.

Les α-aminoacides non fonctionnels préférés sont typiquement la glycine, la valine, la leucine, l'isoleucine, la phényle alanine.

Des exemples d'α-aminoacides fonctionnels sont l'arginine, la glutamine, l'asparagine, le tryptophane, l'Histidine, la proline, la Tyrosine, La Lysine, l'acide aspartique, l'acide glutamique, la Tyrosine, la Sérine, l'arginine, la glutamine, l'asparagine, la proline, la thréonine.

La majorité des α-aminoacides présente un centre chiral sur le carbone en position 2. Deux isomères sont donc possibles : le dextrogyre (noté D) et le Lévogyre (noté L). Les α-aminoacides existent principalement sous la forme L à l'état naturel. Les formes D existent néanmoins également, et sont tout aussi aptes à former des groupes 2,5-dicétopipérazines. Cette technologie couvre donc indifféremment les formes D et les formes L des différents α-aminoacides concernés, ainsi que leurs mélanges.

Selon la nature des radicaux R₁ à R₄, le cycle DKP peut donc posséder jusqu'à deux centres chiraux conférant une isomérie optique.

Cette technologie ne fait également aucune distinction quant à la combinaison des centres chiraux des deux α-aminoacides. Les groupes 2,5-dicétopipérazines portant deux centres chiraux peuvent donc se trouver sous la forme DD, DL, LD ou LL, celles ne portant qu'un centre chiral sous la forme D ou L. Enfin, les groupes 2,5-dicétopipérazine peuvent être complètement achiraux, si les deux α-aminoacides la constituant ne portent pas de centres chiraux. Et ainsi de suite, si un ou plusieurs groupements latéraux R₁ à R₅ portés par un ou plusieurs α-aminoacides constituant le groupe 2,5-dicétopipérazine comporte également un ou plusieurs centres chiraux, toutes les combinaisons peuvent être envisagées.

Enfin, les groupes 2,5-dicétopipérazine peuvent également être en mélange de différents isomères optiques ou diastéréoisomères, par exemple un mélange de pure D,D et de pure L,L, un mélange de D,L et de L,D.

Le groupe DKP de formule (1) peut être constitué de deux α-aminoacides identiques ou différents, selon tous les critères mentionnés ci-dessus : substituant, chiralité.

Tous les groupes DKP obtenues à partir des α-aminoacides mentionnés ci-dessus peuvent également être modifiées chimiquement afin d'introduire de nouvelles fonctions , fonctionnalité ou groupement donneur/accepteur.

Plus préférentiellement, le groupe 2,5-dicétopipérazine de formule (1) est tel que R₁=R₃=R₅=H et R₂ et R₄ sont des substituants comme définit précédemment, identiques ou différents.

Le groupe DKP de formule (1) peut être substitué de manière symétrique. Un exemple préférentiel de cette catégorie de groupe DKP est représenté sur le schéma (6) :

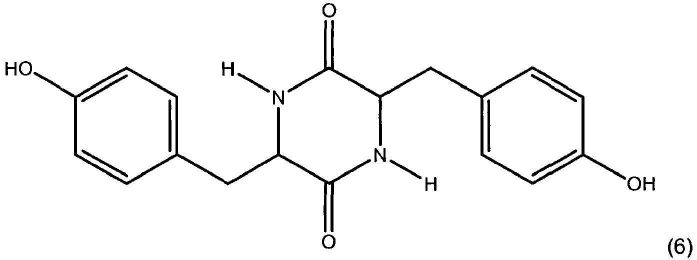

Le groupe DKP de formule (1) peut également être substituée de manière non symétrique. Un exemple de cette catégorie de groupe DKP est représenté sur le schéma (7) :

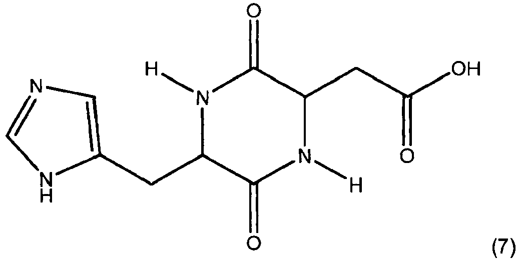

Comme précédemment mentionné, les radicaux R₁, R₂, R₃, R₄ et R₅ peuvent éventuellement contenir un ou plusieurs groupements donneur/accepteur de liaisons H (différents d'un groupe DKP lorsque R₁, R₂, R₃, R₄ et R₅ sont des polymères ou oligomères conventionnels et lorsque ces groupements sont portés par les motifs répétitifs desdits polymères ou oligomères conventionnels). Ces groupements donneur/accepteur peuvent provenir des α-aminoacides choisis pour la synthèse du groupe DKP ou bien être introduits ultérieurement par modification chimique du groupe DKP.

Les groupements donneur/accepteur de liaison H sont entre autres, ceux précédemment définis. Un cas particulier préférentiel est celui des groupements 2,5-dicétopipérazine. Le groupe 2,5-dicétopipérazine de formule (1) peut donc également contenir un groupement 2,5-dicétopipérazine dans ses radicaux R₁, R₂, R₃, R₄ et R₅, comme le montrent les exemples de motifs suivants de formule 8 et 9 ci-dessous:

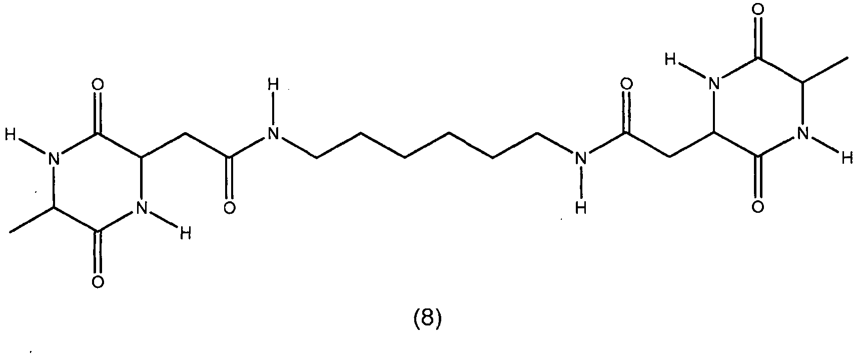

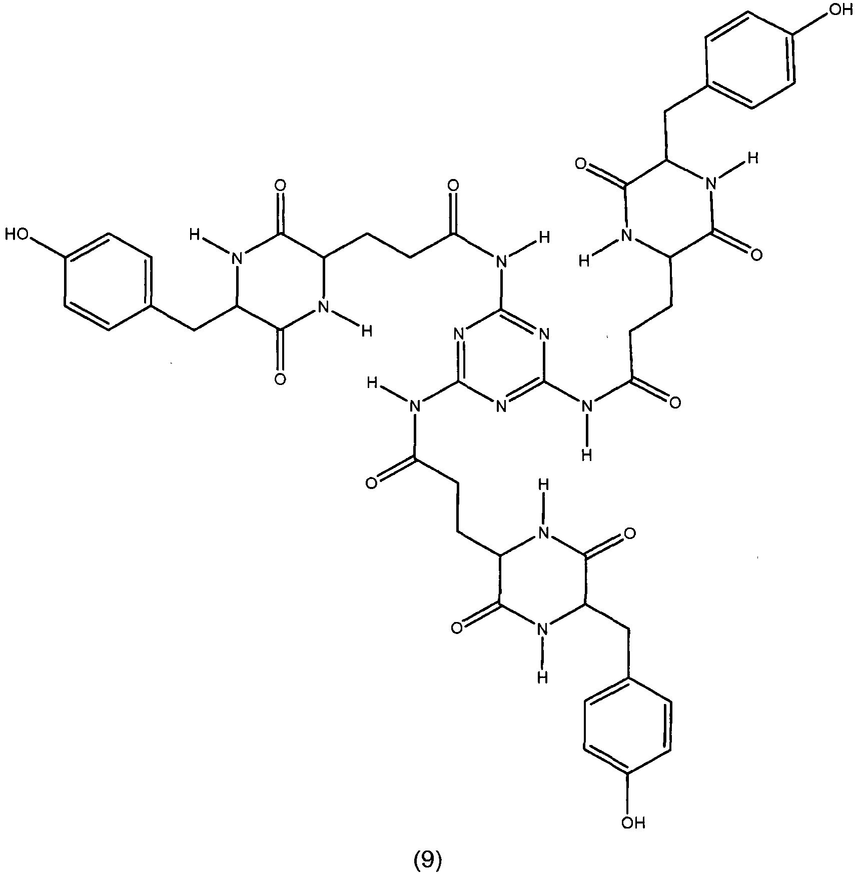

Le polymère supramoléculaire selon l'invention peut éventuellement être obtenu à partir d'un mélange de plusieurs groupes DKP de formule (1).

Le polymère supramoléculaire peut contenir en outre un ou plusieurs motifs répétitifs différents des groupes DKP de formule (1) en interaction par liaisons H avec le groupe DKP de formule (1). Ces motifs répétitifs associés, différents du groupe DKP de formule (1), sont des molécules, des macromères, des oligomères, ou polymères portant une ou plusieurs fonctions donneur et/ou accepteur de liaison H. Les fonctions donneur/accepteur des groupes DKP (1) peuvent alors interagir par liaisons H avec le(s) fonction(s) donneur et/ou accepteur portée(s) par ce(s) motif(s) répétitif(s) associé(s).

Le(s) motif(s) répétitif(s) associé(s) différents des groupes DKP de formule (1) peuvent être organiques, oligomériques, polymériques, inorganiques ou minéraux, métalliques, organométalliques, judicieusement choisis et mélangés avec les groupes DKP.

Des exemples de fonctions donneur et/ou accepteur de liaisons H sont les amine (primaire, secondaire, tertiaire), alcool (primaire, secondaire, aromatique), thiol, acide carboxylique, esters, amide (primaire, secondaire, tertiaire), imide, thioamide, éther, sulfure, imine, azo, sulfone, sulfonate, sulfonamide, urée, uréido, guanido, pyroglutamique, glutarimide, imidazolidone, cyano, carbamate, cétone, aldéhyde, carbonate, silanol, halogènes, hydroxydes métalliques, et métaux carbonyle.

Des exemples de molécules organiques employées comme motifs répétitifs associés avec les groupes DKP sont les amines comme l'hexaméthylène diamine, la mélamine, les aminoacides comme l'acide amino-6 caproique, l'acide amino-11 undécanoique, les diacides comme l'acide adipique, l'acide téréphtalique, les alcools comme l'hydroquinone, les uréides comme l'urée, et les molécules porteuses de fonctions imidazolidones.

Des exemples d'oligomères ou de polymères employés comme motifs répétitifs associés avec les groupes DKP sont les polyamides ou copolyamides (6, 11, 12, 46, 66, 610, 6T, MXD6), les polyuréthanes, les polyurées, les polyesters (PET, PBT, PTT, PLA), les polyesteramides, les polyimines, les polycarbonates, les polyéthers comme les polyéthylène glycols, les Jeffamines.

Des exemples de motifs répétitifs associés inorganiques sont la silice, les aluminosilicates et dérivés, lamellaires ou non.

Le polymère supramoléculaire peut être composé de toute combinaison possible des alternatives décrites ci-dessus.

Le polymère supramoléculaire peut être préparé par toutes les techniques connues de l'homme de l'art, comme le mélange des différents motifs le constituant en solution, en suspension, en émulsion, en voie fondue, en solide. Selon un mode particulier, les motifs répétitifs associés par liaisons hydrogène et constitutifs du polymère supramoléculaire sont mélangés en solution, en suspension, en émulsion, en voie fondue, ou en voie solide.

Les compositions préparées à partir des polymères supramoléculaires tels que définis ci-dessus peuvent être mises en forme pour façonner un objet/article présentant des propriétés particulières adaptées pour un usage spécifique.

Une composition supramoléculaire sera donc composée au moins d'une fraction de molécules, organiques ou oligo/polymères, s'associant selon le principe de la chimie supramoléculaire.

Plus précisément, selon la présente invention, le polymère comprenant des motifs répétitifs liés entre eux par des liaisons hydrogène et dont au moins un desdits motifs répétitifs est un groupe DKP de formule (1) peut donc être le seul ou l'un des constituants employés dans la fabrication des compositions selon l'invention. Dans les compositions selon l'invention, les propriétés seront apportées, pour totalité ou partie, par les interactions supramoléculaires faisant intervenir les groupes DKP (1).

La composition selon l'invention se présente à température ambiante, sous la forme d'une pâte ou d'un solide semi-cristallin ou amorphe.

Une telle composition selon l'invention se présentant, à température ambiante, sous la forme d'une pâte ou d'un solide semi-cristallin ou amorphe, peut être un élastomère, c'est-à-dire présenter un caractère élastique et une température de transition vitreuse inférieure à la température ambiante.

Par « sous la forme d'une pâte », on entendra au sens de la présente invention, que la composition a une consistance molle et est malléable, à température ambiante, par la seule force humaine.

Par « sous la forme d'un solide », on comprendra au sens de la présente invention, que la composition a une consistance dure et n'est pas malléable, à température ambiante, par la seule force humaine. Par exemple, la composition pourra se présenter sous la forme de granulés.

Par « semi-cristallin », on entendra au sens de la présente invention, que la composition possède une température de transition vitreuse mesurable par toute technique conventionnelle connue de l'homme du métier, et qu'elle comprend au moins 5 % de phase amorphe, de préférence au moins 10 % et encore plus préférentiellement au moins 15 % de phase amorphe.

Ces compositions peuvent également contenir des charges de renfort ou de remplissage et éventuellement un ou plusieurs additifs connus de l'homme de l'art.

Comme charges de renfort ou de remplissage, on peut notamment citer les fibres de verre, les fibres de carbone, les fibres naturelles, les fibres d'aramides, et les nanotubes, notamment de carbone. On peut citer comme fibres naturelles le chanvre et le lin. On peut également citer toutes les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

Il est parfaitement possible selon l'invention que la composition comprenne plusieurs types de charges de renfort. Ces charges peuvent présenter un ensimage surfacique qui assure l'adhésion ou une cohésion mécanique entre les fibres et la matrice de polymère supramoléculaire.

La concentration pondérale des charges de renfort ou de remplissage est comprise avantageusement entre 0 % et 60 % en poids par rapport au poids total de la composition, de préférence entre 5 et 50 %.

La composition selon l'invention peut en outre comprendre des additifs classiquement utilisés pour la fabrication de compositions polymères. Ainsi, on peut citer les lubrifiants, les agents ignifugeants, les plastifiants, les agents nucléants, les agents modificateurs de chocs, les catalyseurs, les stabilisants lumière et/ou thermique, les antioxydants, les antistatiques, les colorants, les matifiants, les additifs d'aide au moulage ou autres additifs conventionnels.

Ces charges et additifs peuvent être ajoutés à la composition comprenant le polymère supramoléculaire par des moyens usuels adaptés à chaque charge ou additif, tel que par exemple lors de la synthèse du polymère supramoléculaire ou en mélange en fondu.

La composition peut également comprendre, selon la propriété finale souhaitée, un mélange de polymère supramoléculaire selon l'invention et un ou plusieurs autres polymères, ne faisant pas partie intégrante du polymère supramoléculaire, c'est-à-dire n'étant pas en interaction par le biais de liaisons H. Dans cette catégorie de polymères, on peut notamment citer par exemple les polyoléfines, les polystyréniques, les polyvinyliques, les résines ABS, une résine élastomère ou des mélanges de ceux-ci.

La composition peut comprendre de 30 à 95 % en poids de polymère supramoléculaire, par rapport au poids total de la composition.

Ces compositions peuvent être préparées au moyen des techniques connues de l'homme de l'art, notamment par mélange des différents constituants à chaud, par exemple dans une extrudeuse mono ou bivis, à une température suffisante pour maintenir le polymère supramoléculaire en milieu fondu ; ou à froid dans un mélangeur mécanique notamment.

La composition selon l'invention peut être utilisée pour tout procédé de mise en forme des matières plastiques, tels que par exemple les procédés de moulage, notamment le moulage par injection, le roto-moulage, d'extrusion tels que l'extrusion soufflage, de filage, de filmage, ....

Généralement, le mélange obtenu est extrudé sous forme de joncs qui sont coupés en morceaux pour former des granulés. Les différents constituants de la composition ainsi que les charges et/ou additifs le cas échéant peuvent être ajoutés à n'importe quel moment du processus de fabrication de la composition, notamment par mélange à chaud ou à froid.

La présente invention concerne ainsi aussi un procédé de moulage par injection dans lequel on introduit dans un dispositif de moulage par injection une composition selon l'invention, notamment sous forme de granulés, et l'on procède au moulage.

Les propriétés particulières des compositions selon l'invention, généralement nécessaires pour les usages spécifiques sont à titre d'exemple :
- la température caractéristique de la composition qui peut être définie comme la température à laquelle une quantité substantielle d'interactions physiques inter ou intramoléculaires est formée entre les différents constituants de la composition. Les interactions physiques formées entre les molécules peuvent être rompues au moins partiellement, de manière réversible, en particulier par élévation de la température au dessus d'une température de transition spécifique à la composition (Tg, T ramollissement, Tf). Ces températures caractéristiques de la composition définiront son domaine d'utilisation selon les propriétés recherchées. Un avantage de ces polymères supramoléculaires est que ces liaisons hydrogène sont réversibles. Les compositions de l'invention présentent avantageusement une température de transition vitreuse (Tg), caractéristique de la phase amorphe qu'elles contiennent et permettant de conférer des propriétés mécaniques satisfaisantes aux articles obtenus à partir de ces compositions. La température de transition vitreuse Tg de la composition de l'invention est généralement comprise entre - 120°C et 200°C, de préférence entre -50°C et 150°C.
- la viscosité dynamique : à température supérieure à la température d'usage de la composition, une fluidité importante peut être obtenue par rupture partielle ou totale des interactions supramoléculaires. A température d'usage, de l'existence de ces interactions supramoléculaires résulte une viscosité plus élevée (ainsi que d'autres propriétés applicatives). Pour les compositions de l'invention, la viscosité dynamique à la température d'usage et sous un taux de cisaillement nul, est avantageusement supérieure à 10 Pa.s, de préférence supérieure à 100 Pa.s, et encore plus préférentiellement supérieure à 1000 Pa.s. Au-delà de cette température, la viscosité dynamique des compositions selon l'invention diminue par exemple jusqu'à une valeur inférieure à 1 Pa.s.
- le module : préférentiellement, module élastique, à la température d'usage, est supérieur à 10³ Pascal, de préférence supérieur à 10⁵ Pascal.
- d'autres propriétés peuvent également être considérées : la résistance aux chocs, à la traction, à la flexion, propriétés barrières aux gaz, aux liquides, conductivité électrique, électrostatique, thermique, oxydation, vieillissement, résistance aux solvants, inflammabilité, stabilité dimensionnel, reprise en eau, résistance à la rayure, biodégradabilité, recyclabilité, adhésion, autocicatrisation, aspect de surface, toxicité, ....

Les compositions selon l'invention sont caractérisées en ce qu'elles sont aptes à être mises en forme pour façonner un objet/article, notamment par extrusion, injection, moulage, extrusion soufflage, rotomoulage, ou thermoformage. Les objets/articles ainsi obtenus présentent les propriétés particulières ci-dessus citées pour la composition, lesdites propriétés étant adaptées à l'usage spécifique auquel l'objet/article est destiné.

La présente invention concerne donc, en outre les articles obtenus par mise en forme d'une composition selon l'invention, par un procédé d'extrusion, d'injection, de moulage, d'extrusion soufflage, de rotomoulage, ou de thermoformage.

Il peut s'agir par exemple d'articles choisis dans le groupe constitué des pièces injectées ou moulées, par exemple pour applications automobile, dans le domaine de l'électronique et de l'électrique, dans le domaine des jeux, notamment pour enfants, des films, des revêtements, des poudres, des fils, des compositions adhésives, des compositions de scellement.

Un langage spécifique est utilisé dans la description de manière à faciliter la compréhension du principe de l'invention. Il doit néanmoins être compris qu'aucune limitation de la portée de l'invention n'est envisagée par l'utilisation de ce langage spécifique. Des modifications, améliorations et perfectionnements peuvent notamment être envisagés par une personne au fait du domaine technique concerné sur la base de ses propres connaissances générales.

Le terme et/ou inclut les significations et, ou, ainsi que toutes les autres combinaisons possibles des éléments connectés à ce terme.

### EXEMPLES :

Les 2,5-dicétopipérazines d'α-aminoacides les plus simples sont l'anhydride de glycine (RNCAS: 106-57-0) et l'anhydride d'alanine (RNCAS: 5625-46-7). Ce sont des produits commerciaux disponibles par exemple respectivement chez Acros et chez Sigma-Aldrich. Les produits suivants sont disponibles commercialement: ester méthylique de L-tyrosine (RNCAS: 1080-06-4), L-phénylalanine (RNCAS: 63-91-2), ,acide adipique (RNCAS: 124-04-9), hexaméthylène diamine (RNCAS : 124-09-4), polyamide 66 Technyl SB27A00 (RNCAS: 32131-17-2), POGOL600 (RNCAS: 25322-68-3), Jeffamine ED600 (RNCAS : 65605-36-9).

Les analyses RMN¹H ont été réalisées à 300K à l'aide d'un appareil Bruker AV300 ou Bruker AV500, ou enfin à l'aide d'un appareil Bruker DRX 300 MHz dans le diméthyle sulfoxyde deutéré (DMSO-d6) ou dans l'acide trifluoroacétique deutéré (TFA-d1).

Les analyses par spectrométrie de masse (MS) ont été réalisées sur un appareil GCT Premier de marque Waters équipé d'un analyseur Temps de Vol (TOF). Les échantillons ont été analysés par introduction directe en mode Ionisation chimique en présence du gaz réactant CH₄. Quelques grains de l'échantillon sont introduits dans une perle et la canne d'introduction est chauffée jusqu'à 450°C sous les conditions standard d'analyse en spectrométrie de masse : P = 1,8e-6 torr et T source = 250°C.

La détermination des températures de fusion (Tf) et de transitions vitreuses (Tg) a été réalisée par calorimétrie différentielle à balayage (DSC « Differential Scanning Calorimetry »), à l'aide d'un appareil Mettler DSC822e, respectivement à une vitesse de 10°C/min et 40°C/min. La détermination de la température de fusion (Tf) peut aussi être réalisée par analyse thermique différentielle (ATD) à l'aide d'un appareil Prophy 3, à une vitesse de 10°C/min.

### Groupes A à E - Synthèse de différents groupes 2,5-dicétopiperazine (groupes DKP)

### Groupe A :

### 3,6-bis-(4-hydroxy-benzyl)-pipérazine-2,5-dione

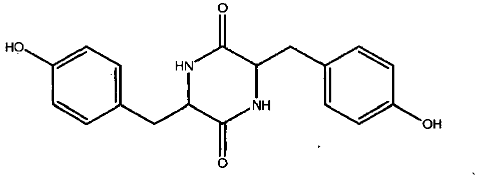

Dans un réacteur en verre muni d'une agitation mécanique et d'un réfrigérant, on place 151,5 g (0,776 mol) d'ester méthylique de L-tyrosine. La température est progressivement portée à 140°C sous atmosphère inerte. Lorsque le milieu réactionnel devient liquide la réaction est prolongée pendant 5h. En fin de synthèse le milieu réactionnel solide est refroidi à température ambiante, puis réduit en poudre pour être lavé à l'eau déminéralisée à 80°C en utilisant 75 ml d'eau par gramme de milieu réactionnel. Après refroidissement à température ambiante, filtration et rinçage à l'eau déminéralisée, le solide d'aspect écru est séché sous vide à 90°C pendant une nuit pour donner 67,72 g (0,207 mol) de la dicétopipérazine désirée. Le rendement est de 53 %.

L'analyse par RMN¹H confirme la structure qui se présente sous la forme de deux isomères : (L,L) 3,6-bis-(4-hydroxy-benzyl)-piperazine-2,5-dione et (L,D) 3,6-bis-(4-hydroxy-benzyl)-piperazine-2,5-dione.

Sa température de fusion déterminée par ATD est un endotherme multimodal centré sur 280°C. RMN¹H (DMSO-d6) :
isomère (L,L) : ; δ 9.2 (OH); d 7.7 (NH); δ 6.85-6.68 (CH aromatique); δ 3.86 (CH) ; δ 2.54 et 2.13 (CH2)
isomère (L,D) : ; δ 9.2 (OH); δ 7.9 (NH); δ 6.90-6.62 (CH aromatique); δ 3.3 (CH) ; δ 2.90 et 2.60 (CH2)
MS : Masse théorique - Masse expérimentale = 326,1266 - 326,1271 = 0,5 mDa

### Groupe B :

### 3,6-dibenzyl-pipérazine-2,5-dione

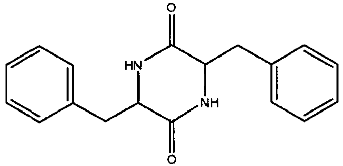

Dans un réacteur en verre muni d'un réfrigérant, on place 30,0 g (0,182 mol) de L-phénylalanine. La température est progressivement portée à 260°C sous atmosphère inerte. La réaction, qui a lieu à l'état solide, est prolongée pendant 1h30. En fin de synthèse le milieu réactionnel solide est refroidi à température ambiante, puis solubilisé dans le diméthlysulfoxyde à 160°C en utilisant 10 ml de solvant par gramme de milieu réactionnel. Après refroidissement à température ambiante, filtration et rinçage au méthanol, le solide d'aspect beige cotonneux est séché sous vide à 90°C pendant une nuit pour donner 18,7 g (0,064 mol) de la dicétopipérazine désirée. Le rendement est de 35 %. Sa température de fusion déterminée par ATD est de 313°C.
RMN¹H (DMSO-d6) : δ 7.9 (NH); δ 7.28-7.04 (CH aromatique); δ 3.90 (CH) ; δ 2.59 et 2.23 (CH2)
MS : Masse théorique - Masse expérimentale = 294,1368 - 294,1334 = 3,4 mDa

### Groupe C :

### 3-(carboxyméthyl)-6-benzyl-pipérazine-2,5-dione

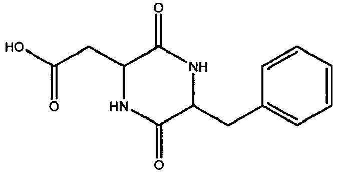

Dans un réacteur en verre muni d'une agitation mécanique et d'un réfrigérant, on place 157,0 g (0,533 mol) de l'ester méthylique de L-aspartyl-L-phénylalanine. La température est progressivement portée à 200°C sous atmosphère inerte. La réaction, qui a lieu à l'état solide, est prolongée pendant 1h30. En fin de synthèse le milieu réactionnel est refroidi à température ambiante pour donner 135,85 g (0,518 mol) de 3-(carboxyméthyl)-6-benzyl-pipérazine-2,5-dione. Le rendement est de 97 %. La température de fusion déterminée par DSC est de 250°C.
RMN¹H (DMSO-d6) : δ 12.2 (OH); δ 8.1 et 7.8 (NH); δ 7.30-7.19 (CH aromatique); δ 4.22 (CH phénylalanyl) ; δ 4.04 (CH aspartyl) ; δ 3.11 et 2.94 (CH₂ phénylalanyl) ; δ 2.05 et 1.59 (CH₂ aspartyl)
MS (gaz réactant : NH4) : Masse théorique - Masse expérimentale = 262,0948 - 262,0982 = 3,4 mDa

### Groupe D :

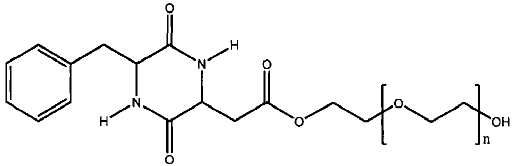

Dans un réacteur en verre muni d'une agitation mécanique et d'un réfrigérant, on place 9,95 g (38,0 mmol) du groupe DKP C ci-dessus préparé et 22,78 g (38,0 mmol) de POGOL600 (un polyéthylène glycol dont la masse molaire moyenne en nombre est de 600 g/mol), sous balayage d'azote. La température du bain est progressivement portée à 220°C où l'on observe un phénomène de condensation. La réaction est prolongée pendant 1 h.

### Groupe E :

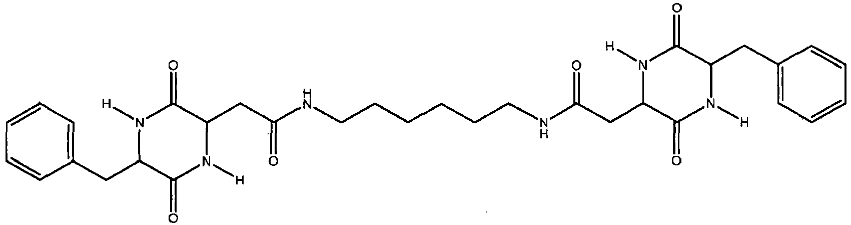

Dans un réacteur en verre muni d'une agitation mécanique et d'un réfrigérant, on place 10,02 g (38,2 mmol) du groupe DKP C ci-dessus préparé et 2,22 g (19,1 mmol) d'hexaméthylène diamine, sous balayage d'azote. La température du bain est progressivement portée à 240°C où l'on observe un phénomène de condensation. La réaction est prolongée pendant 1 h.

### Exemples 1 à 4 : Polymères supramoléculaires à base de groupes DKP seuls et préparation d'éprouvettes le cas échéant.

### Exemple 1 :

13 g (0,040 mol) du groupe DKP **A** ci-dessus préparé sont introduits en poudre par le sas d'un micro-extrudeur (« micro-compounder ») DSM MIDI 2000 (15 cm³), préalablement chauffé à 310°C. Après un temps de mélange de deux minutes à 100 RPM, le produit, très fluide, est coulé dans un moule parallélépipédique (largeur 12,5mm, épaisseur 4 mm, longueur 60 mm) pour former une éprouvette. Après refroidissement l'éprouvette est extraite du moule : elle est fragile. Sa température de fusion déterminée par ATD est un endotherme multimodal centré sur 270°C. L'analyse RMN¹H donne les mêmes déplacements chimiques que ceux du groupe DKP **A.**

### Exemple 2 :

13 g (0,091 mol) d'anhydride d'alanine en poudre sont mis en oeuvre par le procédé détaillé dans l'exemple 1. Le micro-extrudeur est ici préalablement chauffé à 300°C. L'éprouvette formée est fragile. Sa température de fusion déterminée par ATD est de 277°C. Le spectre RMN¹H correspond à celui de l'anhydride d'alanine initial.

### Exemple 3 :

13 g (15,4 mmol) du groupe DKP **D** ci-dessus préparé sont mis en oeuvre par le procédé détaillé dans l'exemple 1. Le micro-extrudeur est ici préalablement chauffé à 200°C. Après refroidissement à température ambiante, le matériau est une pâte élastomérique.

### Exemple 4 :

13 g (21,5 mmol) du groupe DKP **E** ci-dessus préparé sont mis en oeuvre par le procédé détaillé dans l'exemple 1. Le micro-extrudeur est ici préalablement chauffé à 200°C. Le matériau est solide à température ambiante et d'aspect vitreux. Lorsque le matériau subit une trempe il est totalement vitreux et sa transition vitreuse déterminée par DSC est de 104°C.

### Exemples 5 et 6 : Polymères supramoléculaires à base de mélanges de groupes DKP et préparation d'éprouvettes le cas échéant.

### Exemple 5 :

1,03 g (3,5 mmol) du groupe DKP **B** ci-dessus préparé et 0,50 g (3,5 mmol) d'anhydride d'alanine en poudre sont introduits dans un tube à essai et portés progressivement à 290°C sous atmosphère inerte, jusqu'à ce que le mélange soit liquide et homogène. Après refroidissement à température ambiante, le matériau solide est fragile. Sa température de fusion déterminée par ATD est de 242°C, alors que la température de fusion déterminée par ATD du groupe DKP **B** et de l'anhydride d'alanine sont respectivement de 313°C et 275°C. Le spectre RMN¹H confirme la coexistence des structures du groupe DKP **B** et de l'anhydride d'alanine.

### Exemple 6 :

5,8 g (0,051 mol) d'anhydride de glycine et 7,2 g (0,051 mol) d'anhydride d'alanine sont mis en oeuvre par le procédé détaillé dans l'exemple 1. Le micro-extrudeur est ici préalablement chauffé à 300°C. L'éprouvette formée est fragile. Sa température de fusion déterminée par ATD est de 254°C, alors que la température de fusion déterminée par ATD de l'anhydride de glycine et de l'anhydride d'alanine sont respectivement de 320°C et 275°C. Le spectre RMN¹H confirme la coexistence des structures de l'anhydride de glycine et de l'anhydride d'alanine.

### Exemples 7 à 12 : Polymères supramoléculaires contenant des groupes DKP et des motifs répétitifs autres que DKP et préparation d'éprouvettes le cas échéant

### Exemple 7 :

9,0 g (27,6 mmol) du groupe DKP **A** ci-dessus préparé et 4,0 g (27,6 mmol) d'acide adipique sont mis en oeuvre par le procédé détaillé dans l'exemple 1. Le micro-extrudeur est ici préalablement chauffé à 270°C. L'éprouvette formée est fragile. Lorsque le matériau subit une trempe il peut être à l'état amorphe et sa transition vitreuse déterminée par DSC est de 37°C. Le spectre RMN¹H confirme la coexistence des structures du groupe DKP **A** et de l'acide adipique.

### Exemple 8 :

6,4 g (45,0 mmol) d'anhydride d'alanine et 6,6 g (45,0 mmol) d'acide adipique sont mis en oeuvre par le procédé détaillé dans l'exemple 1. Le micro-extrudeur est ici préalablement chauffé à 220°C. L'éprouvette formée est fragile. Sa température de fusion déterminée par ATD est de 131°C. Le spectre RMN¹H confirme la coexistence des structures de l'anhydride d'alanine et de l'acide adipique.

### Exemple 9 :

0,70 g (2,1 mmol) du groupe DKP **A** ci-dessus préparé et 0,25 g (2,1 mmol) d'hexaméthylène diamine sont introduits dans un tube à essai et portés progressivement à 210°C sous atmosphère inerte, jusqu'à ce que le mélange prenne l'aspect d'une pâte. Après refroidissement à température ambiante, le matériau est une pâte élastomérique. Sa température de transition vitreuse déterminée par DSC à 10°C/min est de 52°C. Le spectre RMN¹H confirme la coexistence des structures du groupe DKP **A** et de l'hexaméthylène diamine.

### Exemple 10 :

10,4 g (31,9 mmol) du groupe DKP **A** ci-dessus préparé et 2,6g de polyamide 66 Technyl SB27A00 en poudre sont mis en oeuvre par le procédé détaillé dans l'exemple 3. Le micro-extrudeur est ici préalablement chauffé à 270°C. L'éprouvette formée est modérément fragile. Le matériau a une transition vitreuse déterminée par DSC de 87°C, et un endotherme de fusion multimodal dont la valeur au pic est de 268°C. Le spectre RMN¹H confirme la coexistence des structures du groupe DKP **A** et du polyamide 66.

### Exemple 11 :

0,50 g (1,5 mmol) du groupe DKP **A** ci-dessus préparé et 0,92 g de Jeffamine ED600 (un polyéthylène glycol dont les extrémités de chaine sont des fonctions amine et dont la masse molaire moyenne en nombre est de 600 g/mol) sont introduits dans un tube à essai et portés progressivement à 270°C sous atmosphère inerte. Au bout de 5 minutes à 270°C le mélange est un liquide homogène. Après refroidissement à température ambiante, le matériau est une pâte élastomérique, alors que la Jeffamine ED600 est un liquide à température ambiante. Le spectre RMN¹H confirme la coexistence des structures du groupe DKP **A** et de la Jeffamine ED600.

### Exemple 12 :

0,50 g (1,5 mmol) du groupe DKP **A** ci-dessus préparé et 0,92 g de POGOL600 (un polyéthylène glycol dont la masse molaire moyenne en nombre est de 600 g/mol) sont introduits dans un tube à essai et portés progressivement à 285°C sous atmosphère inerte jusqu'à ce que le mélange soit un liquide homogène. Après refroidissement à température ambiante, le matériau est une pâte élastomérique, alors que le POGOL600 est un liquide visqueux à température ambiante. Le spectre RMN¹H confirme la coexistence des structures du groupe DKP **A** et du POGOL600.

### Exemple 13 et 14: Caractérisation des propriétés macroscopiques des éprouvettes et des polymères supramoléculaires

### Exemple 13 :

L'analyse mécanique dynamique (DMA) est réalisée à l'aide d'un appareil TA Instruments Q800 sur les éprouvettes obtenues dans les exemples 1, 2, 6, 8 et 10. On utilise l'outil de mesure nommé « flexion trois points en double encastrement ». Cet outil se compose de deux parties: la partie externe est composée de deux pinces qui maintiennent l'échantillon, une troisième pince venant serrer l'éprouvette au centre. L'ensemble est situé dans un environnement dont on peut réguler la température (les outils de mesure et l'éprouvette sont placés dans un four chauffé par un canon à chaleur alimenté en azote sec).

On impose alors une déformation sinusoïdale à l'échantillon (fréquence 1 Hz, amplitude 0,05 %). Cette déformation génère une force qui fournit une contrainte permettant d'accéder aux valeurs de module élastique E'. Ces mesures sont réalisées en suivant une rampe de température de -150°C à 250°C à la vitesse de 2°C/min : on peut alors reconstituer les courbes des modules en fonction de la température.

Les valeurs de températures de transition vitreuse (Tg) et de ramollissement (Tr) et de modules mesurées sont indiquées dans le tableau (a) :

**Tableau (a)**

| Echantillon | E' à 0°C | E' à 25°C | E' à 100°C | Tg | Tr |
|---|---|---|---|---|---|
| | GPa | GPa | GPa | °C | °C |
| Exemple 1 | 0,4 | 0,4 | 0,4 | - | 225 |
| Exemple 2 | 0,4 | 0,4 | 0,4 | - | >250 |
| Exemple 6 | 0,7 | 0,7 | 0,9 | - | 235 |
| Exemple 8 | 1,3 | 1,4 | 1,5 | - | 140 |
| Exemple 10 | 2,2 | 2,2 | 1,6 | 89 | 190 |

### Exemple 14 :

L'analyse rhéométrique est réalisée sur les pâtes obtenues dans les exemples 11 et 12 à l'aide d'un appareil Rheometrics ARES, équipé d'une cellule de mesure de 2000 g.cm. On utilise l'outil de mesure de géométrie nommée 'plan-plan', de diamètre 25 mm et d'écartement 1,5 mm. L'échantillon est placé entre deux plans. L'ensemble est situé dans une enceinte dont on régule la température à 60°C. On impose une vitesse de rotation au plan du bas. Il est alors possible de calculer une contrainte τ liée au couple mesuré sur le plan du haut et un gradient de cisaillement γ proportionnel à la vitesse de rotation du plan inférieur, permettant d'effectuer un balayage en écoulement de 0,1 à 100 s⁻¹. On obtient enfin la viscosité à un gradient de vitesse donné à l'aide de la formule suivante : η = τ/γ Les compositions des exemples 11 et 12 ont des comportements particuliers de matériau à seuil. Cette contrainte seuil peut être interprétée comme la contrainte en dessous de laquelle aucune déformation du matériau ne se produit et au-delà de laquelle des liaisons réversibles du matériau supramoléculaire sont rompues, laissant s'exprimer la composante visqueuse du matériau.

Les valeurs de viscosité (η) et de contrainte seuil (τₛₑᵤᵢₗ) sont indiquées dans le tableau (b) :

**Tableau (b)**

| Echantillon | η à 0.1s⁻¹ (kPa.s) | η à 1s⁻¹ (kPa.s) | η à 10s⁻¹ (kPa.s) | τₛₑᵤᵢₗ (kPa) |
|---|---|---|---|---|
| Exemple 11 | 102 | 3 | 0,1 | 5,7 |
| Exemple 12 | 54 | 7 | 0,3 | 4,4 |

## Revendications

1. Composition préparée à partir d'un polymère supramoléculaire comprenant des motifs répétitifs liés entre eux par des liaisons hydrogène et dont au moins un desdits motifs contient un groupe 2,5-dicétopipérazine, ladite composition se présentant à température ambiante sous forme d'une pâte ou d'un solide semi-cristallin ou amorphe.

2. Composition selon la revendication 1, **caractérisé en ce que** le groupe 2,5-dicétopipérazine (groupe DKP) répond à la formule générale (1): 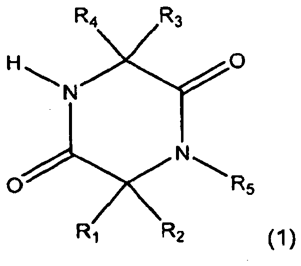 dans laquelle, R₁, R₂, R₃, R₄ et R₅ identiques ou différents représentent :
- un atome, en particulier H, ou
- un groupe hydrocarboné linéaire, ramifié, peigne, étoile, saturé ou insaturé, pouvant éventuellement contenir un ou des hétéroatomes.

3. Composition selon la revendication 2, caractérisé en que les hétéroatomes sont choisis parmi N, O, S, Si, P et les halogènes, de préférence le chlore.

4. Composition selon la revendication 2 ou 3, **caractérisé en ce que** le groupe hydrocarboné est choisi parmi :
- un groupe cycloalkyle, ayant de 3 à 20 atomes de carbone, et préférentiellement de 4 à 12 atomes,
- un groupe aromatique ayant de 6 à 20 atomes de carbone,
- un groupe alkyle ayant de 1 à 20 atomes de carbone, et
- un groupe alkylaryle ou arylalkyle, présentant de 6 à 20 atomes de carbone, de préférence de 6 à 10 atomes de carbone.

5. Composition selon la revendication 4, **caractérisé en ce que** le groupe hydrocarboné est choisi parmi les groupes cyclohexyle, phényle, hydroxyphényle, benzyle, ou tolyle.

6. Composition selon la revendication 2 ou 3, **caractérisé en ce que** un ou plusieurs des radicaux R₁, R₂, R₃, R₄ et R₅ identiques ou différents représentent des polymères ou des oligomères conventionnels dont les motifs répétitifs sont liés par liaison covalentes.

7. Composition selon la revendication 6 **caractérisé en ce que** les polymères ou oligomères sont des polyoxyalkylènes, en particulier polyoxyéthylène, polyoxypropylène, ou des polyamides, polyesters, polyurées, polyuréthanes, polycarbonates, polyacides acryliques et leurs dérivés, polyoléfines, polyvinyliques et polystyréniques.

8. Composition selon la revendication 2 ou 3, **caractérisé en ce que** dans la formule (1), les radicaux R₁ à R₅ contiennent un ou plusieurs groupements donneur et/ou accepteur de liaisons H, ce groupement étant choisi parmi les amines (primaire, secondaire, tertiaire), alcools (primaire, secondaire, aromatique), thiols, acides carboxyliques, esters, amides (primaire, secondaire, tertiaire), imides, thioamides, éthers, sulfures, imines, azos, sulfones, sulfonates, sulfonamides, urées, uréidos, guanidos, cyanos, carbamates, cétones, aldéhydes, carbonates, silanols, halogènes, hydroxydes métalliques, et métaux carbonyle.

9. Composition selon l'une quelconque des revendications 2 à 8, **caractérisé en ce que** dans la formule (1), R₁=R₃= H.

10. Composition selon l'une quelconque des revendications 1 à 9, **caractérisé en ce que** le groupe 2,5-dicétopipérazine de formule (1) est substitué de manière symétrique.

11. Composition selon la revendication 10, **caractérisé en ce que** le groupe 2,5-dicétopipérazine (DKP) est la 3,6-bis-(4-hydroxy-benzyl)-pipérazine-2,5-dione de formule (6) :

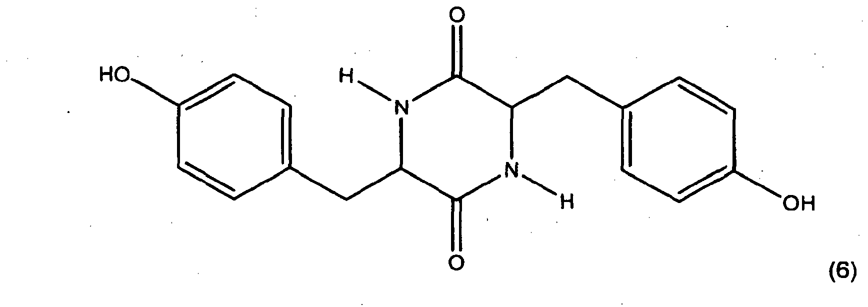

12. Composition selon l'une quelconque des revendications 1 à 9, **caractérisé en ce que** le groupe 2,5-dicétopipérazine de formule (1) est substitué de manière non symétrique.

13. Composition selon l'une des revendications 2 à 12, **caractérisé en ce que** le polymère supramoléculaire est obtenu à partir d'un mélange de plusieurs groupes 2,5-dicétopipérazine de formule (1).

14. Composition selon l'une des revendications 2 à 13, **caractérisé en ce que** le polymère supramoléculaire comprend d'autres motifs répétitifs, différents des groupes DKP de formule (1), portant une ou plusieurs fonctions donneur et/ou accepteur de liaison H associés par liaisons hydrogène aux groupes DKP de formule (1).

15. Composition selon la revendication 14, **caractérisé en ce que** les motifs répétitifs, différents des groupes DKP de formule (1), associés par liaisons hydrogène aux groupes DKP de formule (1), sont des molécules, des macromères, des oligomères, ou polymères.

16. Composition selon l'une des revendications précédentes **caractérisée par le fait que** le polymère supramoléculaire est synthétisé selon un procédé dans lequel les motifs répétitifs associés par liaisons hydrogène et constitutifs dudit polymère supramoléculaire sont mélangés en solution, en suspension, en émulsion, en voie fondue, ou en voie solide.

17. Composition selon l'une quelconque des revendications précédentes, comportant en outre une ou plusieurs charges de renfort ou de remplissage et, éventuellement, un ou plusieurs additifs.

18. Composition selon la revendication 17, comprenant de 30 à 95 % en poids de polymère supramoléculaire, par rapport au poids total de la composition.

19. Composition selon la revendication 17 ou 18, **caractérisée en ce que** les charges de renfort ou de remplissage sont choisies dans le groupe comprenant : les fibres de verre, les fibres de carbone, les fibres naturelles, les fibres d'aramides, et les nanotubes, le chanvre, le lin, les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates, les billes de verre et la poudre de verre.

20. Composition selon l'une des revendications 17 ou 18, **caractérisée en ce que** les additifs sont choisis dans le groupe comprenant : les lubrifiants, les agents ignifugeants, les plastifiants, les agents nucléants, les agents modificateurs de chocs, les catalyseurs, les stabilisants lumière et/ou thermique, les antioxydants, les antistatiques, les colorants, les matifiants, les additifs d'aide au moulage ou autres additifs conventionnels.

21. Composition selon l'une des revendications 1 à 20, **caractérisée en ce qu'**elle comprend en outre un polymère thermoplastique n'étant pas en interaction par liaison H avec le polymère supramoléculaire.

22. Composition selon la revendication 21, **caractérisée en ce que** la composition comprend de 30 à 95 % en poids de polymère supramoléculaire, par rapport au poids total de la composition.

23. Articles obtenus par mise en forme d'une composition selon l'une quelconque des revendications 1 à 22 par un procédé d'extrusion, d'injection, de moulage, d'extrusion soufflage, de rotomoulage, ou de thermoformage.

## Patentansprüche

1. Zusammensetzung, hergestellt aus einem supramolekularen Polymer mit über Wasserstoffbrückenbindungen verbundenen Wiederholungseinheiten, wobei mindestens eine der Einheiten eine 2,5-Diketopiperazingruppe enthält, wobei die Zusammensetzung bei Umgebungstemperatur in Form einer Paste oder eines teilkristallinen oder amorphen Feststoffs vorliegt.

2. Zusammensetzung nach Anspruch 1, **dadurch gekennzeichnet, dass** die 2,5-Diketopiperazingruppe (DKP-Gruppe) der allgemeinen Formel (1) entspricht: 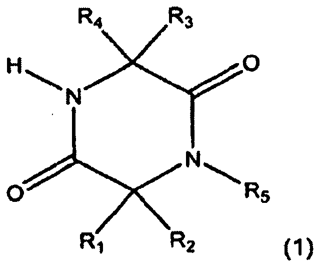 wobei R₁, R₂, R₃, R₄ und R₅ gleich oder verschieden sind und für
- ein Atom, insbesondere H, oder
- eine lineare, verzweigte, kammförmige, sternförmige, gesättigte oder ungesättigte Gruppe auf Kohlenwasserstoffbasis, die gegebenenfalls ein oder mehrere Heteroatome enthält,
stehen.

3. Zusammensetzung nach Anspruch 2, **dadurch gekennzeichnet, dass** die Heteroatome aus N, O, S, Si, P und den Halogenen, vorzugsweise Chlor, ausgewählt sind.

4. Zusammensetzung nach Anspruch 2 oder 3, **dadurch gekennzeichnet, dass** die Gruppe auf Kohlenwasserstoffbasis aus
- einer Cycloalkylgruppe mit 3 bis 20 Kohlenstoffatomen und vorzugsweise 4 bis 12 Atomen,
- einer aromatischen Gruppe mit 6 bis 20 Kohlenstoffatomen,
- einer Alkylgruppe mit 1 bis 20 Kohlenstoffatomen und
- einer Alkylaryl- oder Arylalkylgruppe mit 6 bis 20 Kohlenstoffatomen und vorzugsweise 6 bis 10 Kohlenstoffatomen
ausgewählt ist.

5. Zusammensetzung nach Anspruch 4, **dadurch gekennzeichnet, dass** die Gruppe auf Kohlenwasserstoffbasis aus Cyclohexyl-, Phenyl-, Hydroxyphenyl-, Benzyl- oder Tolylgruppen ausgewählt ist.

6. Zusammensetzung nach Anspruch 2 oder 3, **dadurch gekennzeichnet, dass** einer oder mehrere der Reste R₁, R₂, R₃, R₄ und R₅ gleich oder verschieden sind und für herkömmliche Polymere oder Oligomere, deren Wiederholungseinheiten über kovalente Bindungen verbunden sind, stehen.

7. Zusammensetzung nach Anspruch 6, **dadurch gekennzeichnet, dass** es sich bei den Polymeren bzw. Oligomeren um Polyoxyalkylene, insbesondere Polyoxyethylen, Polyoxypropylen, oder Polyamide, Polyester, Polyharnstoffe, Polyurethane, Polycarbonate, Polyacrylsäuren und Derivate davon, Polyolefine, Polyvinyle und Polystyrole handelt.

8. Zusammensetzung nach Anspruch 2 oder 3, **dadurch gekennzeichnet, dass** in der Formel (1) die Reste R₁ bis R₅ eine oder mehrere H-Brücken-Donor- und/oder -Akzeptorgruppen enthalten, wobei diese Gruppe aus Aminen (primär, sekundär, tertiär), Alkoholen (primär, sekundär, aromatisch), Thiolen, Carbonsäuren, Estern, Amiden (primär, sekundär, tertiär), Imiden, Thioamiden, Ethern, Sulfiden, Iminen, Azos, Sulfonen, Sulfonaten, Sulfonamiden, Harnstoffen, Ureidos, Guanidos, Cyanos, Carbamaten, Ketonen, Aldehyden, Carbonaten, Silanolen, Halogenen, Metalloxiden und Metallcarbonylen ausgewählt ist.

9. Zusammensetzung nach einem der Ansprüche 2 bis 8, **dadurch gekennzeichnet, dass** in der Formel (1) R₁ = R₃ = H.

10. Zusammensetzung nach einem der Ansprüche 1 bis 9, **dadurch gekennzeichnet, dass** die 2,5-Diketopiperazingruppe der Formel (1) symmetrisch substituiert ist.

11. Zusammensetzung nach Anspruch 10, **dadurch gekennzeichnet, dass** es sich bei der 2,5-Diketopiperazingruppe (DKP-Gruppe) um 3,6-Bis(4hydroxybenzyl)piperazin-2,5-dion der Formel (6) handelt:

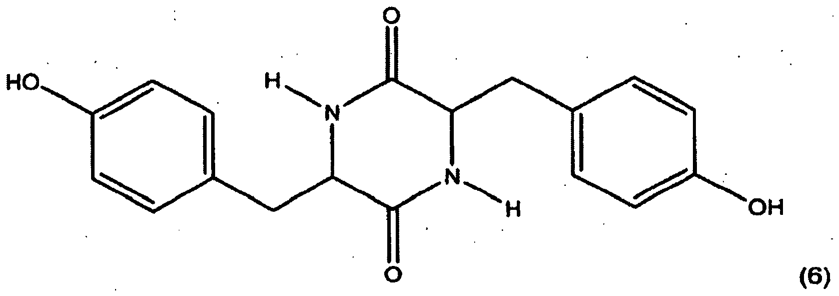

12. Zusammensetzung nach einem der Ansprüche 1 bis 9, **dadurch gekennzeichnet, dass** die 2,5-Diketopiperazingruppe der Formel (1) unsymmetrisch substituiert ist.

13. Zusammensetzung nach einem der Ansprüche 2 bis 12, **dadurch gekennzeichnet, dass** das supramolekulare Polymer aus einer Mischung von mehreren 2,5-Diketopiperazingruppen der Formel (1) erhalten wird.

14. Zusammensetzung nach einem der Ansprüche 2 bis 13, **dadurch gekennzeichnet, dass** das supramolekulare Polymer andere, von den DKP-Gruppen der Formel (1) verschiedene Wiederholungseinheiten mit einer oder mehreren H-Brücken-Donor- und/oder -Akzeptorfunktionen, die über Wasserstoffbrückenbindungen mit den DKP-Gruppen der Formel (1) assoziiert sind, umfasst.

15. Zusammensetzung nach Anspruch 14, **dadurch gekennzeichnet, dass** es sich bei den von den DKP-Gruppen der Formel (1) verschiedenen Wiederholungseinheiten, die über Wasserstoffbrückenbindungen mit den DKP-Gruppen der Formel (1) assoziiert sind, um Moleküle, Makromere, Oligomere oder Polymere handelt.

16. Zusammensetzung nach einem der vorhergehenden Ansprüche, **dadurch gekennzeichnet, dass** das supramolekulare Polymer gemäß einem Verfahren synthetisiert wird, bei dem die über Wasserstoffbrückenbindungen assoziierten Wiederholungseinheiten, aus denen das supramolekulare Polymer aufgebaut ist, in Lösung, in Suspension, in Emulsion, in der Schmelze oder als Feststoffe gemischt werden.

17. Zusammensetzung nach einem der vorhergehenden Ansprüche, die außerdem einen oder mehrere verstärkende oder streckende Füllstoffe und gegebenenfalls ein oder mehrere Additive umfasst.

18. Zusammensetzung nach Anspruch 17, die 30 bis 95 Gew.-% supramolekulares Polymer, bezogen auf das Gesamtgewicht der Zusammensetzung, umfasst.

19. Zusammensetzung nach Anspruch 17 oder 18, **dadurch gekennzeichnet, dass** die verstärkenden oder streckenden Füllstoffe aus der Gruppe umfassend Glasfasern, Kohlefasern, Naturfasern, Aramidfasern, Nanoröhren, Hanf, Flachs, plättchenförmige, teilchenförmige Füllstoffe und/oder exfolierbare oder nicht exfolierbare Nanofüllstoffe wie Aluminiumoxid, Ruß, Alumosilikat-Tone, Montmorillonite, Zirconiumphosphat, Kaolin, Calciumcarbonat, Diatomeenerden, Graphit, Glimmer, Siliciumdioxid, Titandioxid, Zeolithe, Talk, Wollastonit, polymere Füllstoffe wie beispielsweise Dimethacrylat-Teilchen, Glaskügelchen und Glaspulver ausgewählt sind.

20. Zusammensetzung nach einem der Ansprüche 17 oder 18, **dadurch gekennzeichnet, dass** die Additive aus der Gruppe umfassend Gleitmittel, Flammschutzmittel, Weichmacher, Nukleierungsmittel, Schlagzähigkeitsmodifikatoren, Katalysatoren, Licht- und/oder Wärmestabilisatoren, Antioxidantien, Antistatika, Farbmittel, Mattierungsmittel, Formhilfsmittel oder andere herkömmliche Additive ausgewählt sind.

21. Zusammensetzung nach einem der Ansprüche 1 bis 20, **dadurch gekennzeichnet, dass** sie außerdem ein thermoplastisches Polymer das nicht über H-Brückenbindungen mit dem supramolekularen Polymer wechselwirkt, umfasst.

22. Zusammensetzung nach Anspruch 21, **dadurch gekennzeichnet, dass** die Zusammensetzung 30 bis 95 Gew.-% supramolekulares Polymer, bezogen auf das Gesamtgewicht der Zusammensetzung, umfasst.

23. Artikel, erhalten durch Formen einer Zusammensetzung nach einem der Ansprüche 1 bis 22 durch ein Extrusions-, Spritzguss-, Abform-, Extrusionsblas-, Rotationsgieß- oder Warmformverfahren.

## Claims

1. Composition prepared from a supramolecular polymer comprising repeat units linked to one another via hydrogen bonds and at least one of said units of which contains a 2,5-diketopiperazine group, said composition being, at ambient temperature, in the form of a paste or of a semicrystalline or amorphous solid.

2. Composition according to Claim 1, **characterized in that** the 2,5-diketopiperazine group (DKP group) corresponds to the general formula (1): 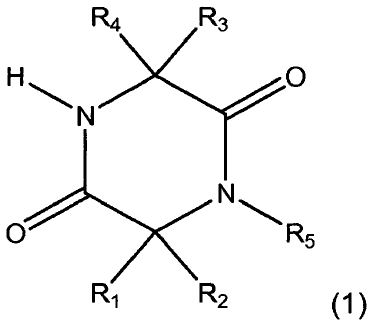 in which R₁, R₂, R₃, R₄ and R₅, which may be identical or different, represent:
- an atom, in particular H, or
- a saturated or unsaturated, linear, branched, comb or star hydrocarbon-based group which can optionally contain one or more heteroatoms.

3. Composition according to Claim 2, **characterized in that** the heteroatoms are selected from N, O, S, Si, P and halogens, preferably chlorine.

4. Composition according to Claim 2 or 3, **characterized in that** the hydrocarbon-based group is selected from:
- a cycloalkyl group containing from 3 to 20 carbon atoms, and preferentially from 4 to 12 atoms,
- an aromatic group containing from 6 to 20 carbon atoms,
- an alkyl group containing from 1 to 20 carbon atoms, and
- an alkylaryl or arylalkyl group containing from 6 to 20 carbon atoms, preferably from 6 to 10 carbon atoms.

5. Composition according to Claim 4, **characterized in that** the hydrocarbon-based group is selected from cyclohexyl, phenyl, hydroxyphenyl, benzyl or tolyl groups.

6. Composition according to Claim 2 or 3, **characterized in that** one or more of the radicals R₁, R₂, R₃, R₄ and R₅, which may be identical or different, represent conventional polymers or oligomers of which the repeat units are linked via covalent bonds.

7. Composition according to Claim 6, **characterized in that** the polymers or oligomers are polyoxyalkylenes, in particular polyoxyethylene and polyoxypropylene, or polyamides, polyesters, polyureas, polyurethanes, polycarbonates, polyacrylic acids and derivatives thereof, polyolefins, polyvinyls and polystyrenes.

8. Composition according to Claim 2 or 3, **characterized in that**, in formula (1), the radicals R₁ to R₅ contain one or more H-bond donor and/or acceptor groups, this group being selected from amines (primary, secondary, tertiary), alcohols (primary, secondary, aromatic), thiols, carboxylic acids, esters, amides (primary, secondary, tertiary), imides, thioamides, ethers, sulfides, imines, azos, sulfones, sulfonates, sulfonamides, ureas, ureidos, guanidos, cyanos, carbamates, ketones, aldehydes, carbonates, silanols, halogens, metal hydroxides, and metal carbonyls.

9. Composition according to any one of Claims 2 to 8, **characterized in that**, in formula (1), R₁ = R₃ = H.

10. Composition according to any one of Claims 1 to 9, **characterized in that** the 2,5-diketopiperazine group of formula (1) is substituted symmetrically.

11. Composition according to Claim 10, **characterized in that** the 2,5-diketopiperazine (DKP) group is 3,6-bis(4-hydroxybenzyl)piperazine-2,5-dione of formula (6):

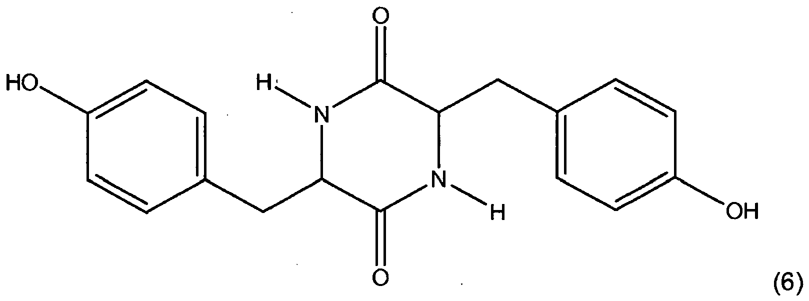

12. Composition according to any one of Claims 1 to 9, **characterized in that** the 2,5-diketopiperazine group of formula (1) is substituted nonsymmetrically.

13. Composition according to one of Claims 2 to 12, **characterized in that** it is obtained from a mixture of several 2,5-diketopiperazine groups of formula (1).

14. Composition according to one of Claims 2 to 13, **characterized in that** it comprises other repeat units, different than the DKP groups of formula (1), bearing one or more H-bond donor and/or acceptor functions associated via hydrogen bonds with the DKP groups of formula (1).

15. Composition according to Claim 14, **characterized in that** the repeat units, different than the DKP groups of formula (1), associated via hydrogen bonds with the DKP groups of formula (1), are molecules, macromers, oligomers or polymers.

16. Composition according to one of the preceding claims, **characterized in that** the supramolecular polymer is synthesized by a process in which the repeat units associated via hydrogen bonds and which are constituents of said supramolecular polymer are mixed in solution, in suspension, in an emulsion, by molten mixing, or as solids.

17. Composition according to any one of the preceding claims, also comprising one or more reinforcing or bulking fillers and, optionally, one or more additives.

18. Composition according to Claim 17, comprising from 30 to 95% by weight of supramolecular polymer, relative to the total weight of the composition.

19. Composition according to Claim 17 or 18, **characterized in that** the reinforcing or bulking fillers are selected from the group consisting of: glass fibers, carbon fibers, natural fibers, aramid fibers, and nanotubes, hemp, flax, lamellar particulate fillers and/or exfoliable or nonexfoliable nanofillers, such as alumina, carbon black, aluminosilicate clays, montmorillonites, zirconium phosphate, kaolin, calcium carbonate, diatomaceous earths, graphite, mica, silica, titanium dioxide, zeolites, talc, wollastonite, polymeric fillers such as, for example, dimethacrylate particles, glass beads and glass powder.

20. Composition according to either of Claims 17 and 18, **characterized in that** the additives are selected from the group consisting of: lubricants, flame retardants, plasticizers, nucleating agents, impact modifiers, catalysts, light and/or heat stabilizers, antioxidants, antistatic agents, dyes, matting agents, molding aids or other conventional additives.

21. Composition according to one of Claims 1 to 20, **characterized in that** it also comprises a thermoplastic polymer not interacting via H bonding with the supramolecular polymer.

22. Composition according to Claim 21, **characterized in that** the composition comprises from 30 to 95% by weight of supramolecular polymer, relative to the total weight of the composition.

23. Articles obtained by forming a composition according to any one of Claims 1 to 22 by means of an extrusion, injection-molding, molding, extrusion-blow molding, rotomolding or thermoforming process.
